(19) 

**Europäisches Patentamt**
**European Patent Office**
**Office européen des brevets**

(11) **EP 3 780 185 A1**

(12) **EUROPEAN PATENT APPLICATION**
published in accordance with Art. 153(4) EPC

(43) Date of publication:
**17.02.2021 Bulletin 2021/07**

(21) Application number: **19774408.9**

(22) Date of filing: **29.03.2019**

(51) Int Cl.:
*H01M 4/587* [(2010.01)]    *H01M 4/36* [(2006.01)]

(86) International application number:
**PCT/JP2019/014113**

(87) International publication number:
**WO 2019/189800 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2018 JP 2018064736**

(71) Applicant: **Mitsubishi Chemical Corporation**
**Chiyoda-ku**
**Tokyo 100-8251 (JP)**

(72) Inventors:
• **YAMADA, Shunsuke**
 **Tokyo 100-8251 (JP)**
• **ISHIWATARI, Nobuyuki**
 **Tokyo 100-8251 (JP)**
• **SATO, Tomohiro**
 **Tokyo 100-8251 (JP)**

(74) Representative: **Vossius & Partner**
**Patentanwälte Rechtsanwälte mbB**
**Siebertstrasse 3**
**81675 München (DE)**

(54) **NEGATIVE ELECTRODE MATERIAL FOR NONAQUEOUS SECONDARY BATTERIES, NEGATIVE ELECTRODE FOR NONAQUEOUS SECONDARY BATTERIES, AND NONAQUEOUS SECONDARY BATTERY**

(57)    A negative electrode material for nonaqueous secondary batteries which includes graphite including amorphous carbon deposited on at least a part of the surface of the graphite. The negative electrode material has a density index ($D_{r-t}$) of 0.080 g/cm$^3$ or less. The density index ($D_{r-t}$) is represented by Formula 1 below. Formula 1: $D_{r-t}$ (g/cm$^3$) = [Powder density (g/cm$^3$) measured when volume resistivity is 0.05 $\Omega \cdot$cm] - [Tap density (g/cm$^3$)]

EP 3 780 185 A1

**Description**

Technical Field

The present invention relates to a negative electrode material for nonaqueous secondary batteries which is excellent in terms of low-temperature input-output characteristic, quick charge-discharge characteristic, and cycle characteristic. The present invention also relates to a negative electrode for nonaqueous secondary batteries and a nonaqueous secondary battery that include the negative electrode material for nonaqueous secondary batteries.

Background Art

There has been an increasing demand for high-capacity secondary batteries with reductions in the sizes of electronic devices. Particular attention has been placed on nonaqueous secondary batteries that have a higher energy density than nickel-cadmium batteries or nickel-hydrogen batteries and are excellent in terms of quick charge-discharge characteristic and, in particular, lithium-ion secondary batteries. Specifically, a nonaqueous lithium secondary battery that includes positive and negative electrodes capable of occluding and releasing lithium ions and a nonaqueous electrolyte solution that contains a lithium salt, such as $LiPF_6$ or $LiBF_4$, dissolved therein has been developed and used.

Various types of negative electrode materials for nonaqueous lithium secondary batteries have been proposed. Graphite carbon materials, such as natural graphite, artificial graphite produced by the graphitization of coke or the like, graphitized mesophase pitch, and graphitized carbon fibers, have been used because, for example, they increase capacity and enhance the flatness of discharge potential. Amorphous carbon materials have been also used because, for example, they are relatively stable toward particular electrolyte solutions. A carbon material produced by coating the surfaces of graphite particles with amorphous carbon or attaching amorphous carbon onto the surfaces of graphite particles in order to achieve two properties, that is, the property of graphite to increase capacity and reduce irreversible capacity and the property of amorphous carbon to enhance stability toward electrolyte solutions, has been also used.

In the recent fields of electric vehicles and the like, greater importance is placed on, for example, high capacity and excellent low-temperature input-output characteristic. From the above viewpoint, among the above negative electrode materials for nonaqueous lithium secondary batteries, the material produced by coating the surfaces of graphite particles with amorphous carbon or attaching amorphous carbon onto the surfaces of graphite particles has been used. There have been proposed the following negative electrode materials produced by improving the input-output characteristic of the above materials at low temperatures. PTL 1 discloses a negative electrode material that includes composite particles constituted by graphite particles and carbon microparticles having a primary particle size of 3 nm or more and 500 nm or less and has a Raman R(90/10) value satisfying predetermined conditions. Fine channels uniformly and continuously formed in the surface of the negative electrode active material allow Li ions to migrate with efficiency even at low temperatures. PTL 2 discloses a negative electrode material produced by mixing composite graphite particles prepared by baking graphite particles on which a mixture of pitch and carbon black is deposited with composite graphite particles prepared by graphitizing the above composite graphite particles at further high temperatures in order to increase capacity and improve quick charge-discharge characteristic. PTL 3 discloses a technique in which graphite particles that have a high tap density and include amorphous carbon covering the surfaces are mixed with graphite particles having a high tap density in order to improve quick charge-discharge characteristic and cycle characteristic. PTL 4 discloses a technique in which a negative electrode material having a high tap density and a large particle size distribution half-width is used to improve quick charge-discharge characteristic and cycle characteristic. PTL 5 discloses a technique in which a negative electrode material composed of a granular carbon material including amorphous carbon deposited on the surface thereof, the thermal characteristics of the negative electrode material satisfying predetermined conditions, is used to improve input-output characteristics and press load.

PTL 1: Japanese Patent Publication No. 2014-60148A
PTL 2: Japanese Patent Publication No. 2008-27664A
PTL 3: Japanese Patent Publication No. 2014-241302A
PTL 4: Japanese Patent Publication No. 2013-197082A
PTL 5: Japanese Patent Publication No. 2017-45574A

As a result of the studies conducted by the inventors of the present invention, it was found that the negative electrode materials for nonaqueous secondary batteries described in PTLs 1 and 2 are not capable of forming electrical conduction paths between particles of the negative electrode material and diffusing Li ions in the electrode to sufficient degrees and therefore may fail to enhance low-temperature input-output characteristic, quick charge-discharge characteristic, cycle characteristic, and the like to sufficient degrees. It was also found that, although the negative electrode materials for nonaqueous secondary batteries described in PTLs 3 to 5 are capable of diffusing Li ions in the electrode to a sufficient degree by increasing tap density, they are not capable of forming sufficient electrical conduction paths and therefore may fail to enhance low-temperature input-output characteristic, quick charge-discharge characteristic, cycle characteristic, and the like to sufficient degrees.

Summary of Invention

An object of the present invention is to provide a negative electrode material for nonaqueous secondary batteries which is excellent in terms of low-temperature input-output characteristic, quick charge-discharge characteristic, and cycle characteristic and a negative electrode for nonaqueous secondary batteries and a nonaqueous secondary battery that include the negative electrode material.

Solution to Problem

The inventors of the present invention conducted extensive studies in order to achieve the object and consequently found that the object may be achieved by using a negative electrode material for nonaqueous secondary batteries which includes graphite including amorphous carbon deposited on at least a part of the surface of the graphite, the negative electrode material satisfying a specific density index. Specifically, the summary of the present invention is as follows.

[1] A negative electrode material for nonaqueous secondary batteries, the negative electrode material comprising graphite including amorphous carbon deposited on at least a part of a surface of the graphite, the negative electrode material having a density index ($D_{r-t}$) of 0.080 g/cm$^3$ or less, wherein the density index ($D_{r-t}$) is represented by Formula 1 below.

$$D_{r-t} \ (g/cm^3) = [Powder \ density \ (g/cm^3) \ measured \ when$$
$$volume \ resistivity \ is \ 0.05 \ \Omega \cdot cm] - [Tap \ density \ (g/cm^3)]$$

[2] The negative electrode material for nonaqueous secondary batteries according to [1], the negative electrode material having a circularity of 0.90 or more, wherein the circularity is measured by flow system particle image analysis.
[3] The negative electrode material for nonaqueous secondary batteries according to [1]or [2], wherein a volume resistivity of the negative electrode material which is measured when a powder density is equal to a tap density is 0.150 $\Omega \cdot$cm or less.
[4] The negative electrode material for nonaqueous secondary batteries according to any one of [1] to [3], the carbon material having a tap density of 0.88 to 1.65 g/cm$^3$.
[5] The negative electrode material for nonaqueous secondary batteries according to any one of [1] to [4], the carbon material having a Raman R value of 0.20 or more and 1.00 or less, wherein the Raman R value is represented by Formula 2 below.

$$[Raman \ R \ value] = [Intensity \ I_B \ of \ peak \ P_B \ occurring$$
$$around \ 1360 \ cm^{-1} \ in \ Raman \ spectral \ analysis]/[Intensity \ I_A \ of$$
$$peak \ P_A \ occurring \ around \ 1580 \ cm^{-1}]$$

[6] A negative electrode for nonaqueous secondary batteries, the negative electrode comprising a current collector and an active material layer disposed on the current collector, the active material layer including the negative electrode material according to any one of [1] to [5] .
[7] A nonaqueous secondary battery comprising positive and negative electrodes and an electrolyte, the negative electrode being the negative electrode for nonaqueous secondary batteries according to [6].

Advantageous Effects of Invention

According to the present invention, a negative electrode material for nonaqueous secondary batteries which is excellent in terms of low-temperature input-output characteristic, quick charge-discharge characteristic, and cycle characteristic and a negative electrode for nonaqueous secondary batteries and a nonaqueous secondary battery that include the negative electrode material may be provided. Description of Embodiments

The present invention is described in detail below. The present invention is not limited by the following description. Various modifications may be made without departing from the spirit and scope of the present invention. In the present invention, when a range is expressed using two numerical values or two physical properties with "to" interposed therebetween, the two numerical values or two physical properties before and after "to" are included in the range.

{Negative Electrode Material for Nonaqueous Secondary Batteries}

A negative electrode material for nonaqueous secondary batteries according to the present invention (hereinafter, may be referred to simply as "negative electrode material according to the present invention") includes graphite including amorphous carbon deposited on at least a part of the surface of the graphite. The density index ($D_{r\text{-}t}$) of the negative electrode material which is represented by Formula 1 below is 0.080 g/cm$^3$ or less.

$$\text{Formula 1:}$$

$$D_{r\text{-}t} \ (g/cm^3) = [\text{Powder density } (g/cm^3) \text{ measured when}$$

$$\text{volume resistivity is } 0.05 \ \Omega \cdot cm] - [\text{Tap density } (g/cm^3)]$$

The negative electrode material for nonaqueous secondary batteries according to the present invention may be excellent in terms of low-temperature input-output characteristic, quick charge-discharge characteristic, and cycle characteristic.

In general, since particles of a negative electrode material having a high tap density are spherical or lump-like, the contact between the particles is poor and volume resistivity is apt to increase. In particular, when density is low, the degree of the contact between the particles is further low and volume resistivity may further increase. As a result, sufficient electrical conduction paths may fail to be formed and, accordingly, low-temperature input-output characteristic, quick charge-discharge characteristic, cycle characteristic, and the like may become degraded. On the other hand, in the case where tap density is reduced in order to enhance the contact between the particles and improve the formation of electrical conduction paths, particles of the negative electrode material may become flat or flake-like and be aligned in the parallel direction inside the electrode. This increases the degree of flection of the channels through which Li ions migrate in the vertical direction and inhibits Li ions from migrating inside the electrode smoothly. Consequently, low-temperature input-output characteristic, quick charge-discharge characteristic, cycle characteristic, and the like may become degraded.

In contrast, although the reasons for which the negative electrode material according to the present invention produces the advantageous effects are not clear, adjusting the density index ($D_{r\text{-}t}$) to fall within the above specific range and thereby keeping the particle shape more spherical or lump-like reduce the degree of flection of the channels through which Li ions migrate and allow Li ions to migrate inside the electrode smoothly. Furthermore, even at a lower powder density, volume resistivity is low and sufficient electrical conduction paths may be formed. This may enhance low-temperature input-output characteristic, quick charge-discharge characteristic, cycle characteristic, and the like.

The meaning of the density index ($D_{r\text{-}t}$) being smaller than the specific value is that, although the negative electrode material has a higher tap density and particles of the negative electrode material are more spherical or lump-like, the powder density (g/cm$^3$) measured when the volume resistivity is reduced to a predetermined value is lower, that is, even at a lower powder density, volume resistivity is low and sufficient electrical conduction paths may be formed.

[Graphite]

The negative electrode material according to the present invention includes graphite including amorphous carbon deposited on at least a part of the surface of the graphite. In the case where the negative electrode material is used for lithium-ion secondary batteries, the graphite may be any graphite including amorphous carbon deposited on at least a part of the surface of the graphite and is preferably graphite capable of occluding and releasing lithium ions. Specific examples of the graphite include flake-like, lump-like, or plate-like natural graphite and artificial graphite produced by heating petroleum coke, coal pitch coke, coal needle coke, mesophase pitch, or the like to 2500°C or more.

It is preferable to subject the above graphite to a mechanical energy treatment in order to perform spheronization of the graphite. Furthermore, in such a case, the amount of edges of the graphite which serve as Li-ion intercalation/deintercalation sites are increased and, accordingly, low-temperature input-output characteristic may be enhanced. The mechanical energy treatment may be performed by, for example, charging the natural or artificial graphite into an apparatus including a rotor provided with a number of blades disposed inside the casing and rotating the rotor at a high speed to repeatedly apply a mechanical action, such as shock compression, friction, or a shear force, to the natural or artificial graphite.

The negative electrode material according to the present invention preferably includes spherical graphite as graphite in order to enhance filling properties and thereby enable the formation of an active material layer having a high density and an increase in capacity. Moreover, in such a case, the gaps formed between the particles included in the resulting electrode body may have appropriate shapes, which allow smooth migration of an electrolyte solution and enhance quick charge-discharge characteristic. The spherical graphite may be produced by subjecting an appropriate type of graphite to a spheronization treatment. Examples of a spheronization treatment method include a method in which a shear force or a compressive force is applied to the graphite to mechanically enhance the sphericity of the graphite and a mechanical-physical treatment method in which plural microparticles are granulated due to the adhesion of a binder or the microparticles.

Furthermore, as the graphite included in the negative electrode material according to the present invention, graphite including amorphous carbon deposited on at least a part of the surface of the graphite may be produced by mixing the spherical graphite with petroleum tar or pitch, coal tar or pitch, or a resin, such as polyvinyl alcohol, polyacrylonitrile, a phenolic resin, or cellulose, using a solvent or the like as needed and baking the resulting mixture in a non-oxidizing atmosphere at 500°C to 2000°C, preferably at 600°C to 1800°C, more preferably at 700°C to 1600°C, and further preferably at 800°C to 1500°C. Since the negative electrode material according to the present invention includes the graphite including amorphous carbon deposited on at least a part of the surface of the graphite, low-temperature input-output characteristic may be further enhanced.

Specifically, in the negative electrode material according to the present invention, the mass ratio between the graphite and the amorphous carbon ({[Mass of Amorphous Carbon]/[Mass of Graphite]} x 100) is preferably 0.1% or more, is more preferably 0.5% or more, is further preferably 1% or more, is particularly preferably 2% or more, and is most preferably 3% or more; and is preferably 30% or less, is more preferably 20% or less, is further preferably 15% or less, and is particularly preferably 10% or less. It is preferable that the above mass ratio fall within the above range in order to achieve high capacity. Furthermore, in such a case, ease of intercalation and deintercalation of Li ions may be increased and, consequently, low-temperature input-output characteristic, quick charge-discharge characteristic, and cycle characteristic may be enhanced. The above mass ratio may be determined on the basis of baking yield.

[Physical Properties]

The negative electrode material according to the present invention satisfies the specific density index ($D_{r-t}$) below. The negative electrode material according to the present invention preferably satisfies the following physical properties.

<Density Index ($D_{r-t}$) >

The negative electrode material according to the present invention has a density index ($D_{r-t}$) of 0.080 $g/cm^3$ or less. Since the negative electrode material according to the present invention includes the graphite including amorphous carbon deposited on at least a part of the surface of the graphite and has a $D_{r-t}$ of 0.080 $g/cm^3$ or less, the negative electrode material is excellent in terms of low-temperature output characteristic, fast charge-discharge characteristic, and cycle characteristic. In order to further enhance the above characteristics, the $D_{r-t}$ of the negative electrode material is preferably 0.070 $g/cm^3$ or less, is more preferably 0.065 $g/cm^3$ or less, is further preferably 0.060 $g/cm^3$ or less, and is particularly preferably 0.055 $g/cm^3$ or less. From the viewpoint of filling properties, capacity, and processability, the $D_{r-t}$ of the negative electrode material is preferably 0 $g/cm^3$ or more and is more preferably 0.010 $g/cm^3$ or more.

As expressed in Formula 1, $D_{r-t}$ is determined using the powder density and the tap density. Thus, $D_{r-t}$ can be calculated by measuring the powder density and the tap density described below. The method for controlling $D_{r-t}$ is described in detail in the description of the method for producing the negative electrode material according to the present invention.

<Powder Density Measured When Volume Resistivity Is 0.05 $\Omega \cdot cm$>

The powder density of the negative electrode material according to the present invention which is measured when the volume resistivity of the negative electrode material is 0.05 $\Omega \cdot cm$ is preferably 0.8 $g/cm^3$ or more, is more preferably 0.85 $g/cm^3$ or more, is further preferably 0.88 $g/cm^3$ or more, is particularly preferably 0.9 $g/cm^3$ or more, and

is most preferably 0.94 g/cm$^3$ or more; and is preferably 1.65 g/cm$^3$ or less, is more preferably 1.35 g/cm$^3$ or less, is further preferably 1.2 g/cm$^3$ or less, is particularly preferably 1.13 g/cm$^3$ or less, and is most preferably 1.11 g/cm$^3$ or less. When the above powder density is equal to or more than the above lower limit, the filling properties of a negative electrode material layer are enhanced and, consequently, a high-density negative electrode sheet that is easy to roll may be readily formed, that is, density can be increased. Moreover, the degree of flection of the channels through which Li ions migrate may be reduced in the resulting electrode body. In addition, the gaps formed between the particles included in the electrode body may have appropriate shapes. This allows smooth migration of an electrolyte solution and enhances quick charge-discharge characteristic. From the above viewpoints, the above powder density is preferably equal to or more than the above lower limit. When the above powder density is equal to or less than the above upper limit, sufficient electrical conduction paths may be formed even at a lower powder density. This enhances low-temperature input-output characteristic, quick charge-discharge characteristic, and cycle characteristic. From the above viewpoints, the above powder density is preferably equal to or less than the above upper limit.

The above powder density is the powder density determined by charging 3.0 g of the negative electrode material into a cylindrical resistance measurement container having a cross-sectional area of 3.14 cm$^2$, gradually increasing the pressure to increase the powder density, and measuring the powder density at the time when the volume resistivity reaches 0.05 $\Omega \cdot$ cm with powder resistance measuring equipment (e.g., powder resistivity measurement systems "MCP-PD51", "Loresta-GP 4-pin type", and "MCP-T600" produced by Mitsubishi Chemical Analytech Co., Ltd.). Specifically, the following method is used.

<<Detailed Measuring Method>>

First, the apparatus is corrected. When a correction is made for load, it is confirmed whether the load measured when the bottom of the cylindrical container into which the negative electrode material is to be charged is not in contact with the push rod that is inserted into the container from above and applies a pressure to the negative electrode material is 0 kgf/3.14 cm$^2$.

Then, a thickness gage is corrected. Specifically, the cylindrical container and the push rod are brought close to each other with a hydraulic pump. A zero-point adjustment is made such that the thickness gage reads 0.00 mm when the load is 20 kgf/3.14 cm$^2$. After the completion of the correction, 3.0 g of the negative electrode material is charged into a cylindrical container having a diameter of 2 cm. The height of the negative electrode material is adjusted such that a load is uniformly applied to the negative electrode material. The base is elevated with a hydraulic pump in order to insert the push rod into the cylindrical container. While the value read by the thickness gage is monitored, the pressure is increased to gradually increase the powder density. The powder density measured when the volume resistivity reaches 0.05 $\Omega \cdot$ cm is used. In order to reduce measurement variation, the above measurement is conducted at least twice. In the case where the measurement variation is large, the above measurement may be conducted three times and the average of two values closer to each other is used.

<Tap Density>

The tap density (g/cm$^3$) of the negative electrode material according to the present invention is preferably 0.8 g/cm$^3$ or more, is more preferably 0.85 g/cm$^3$ or more, is further preferably 0.88 g/cm$^3$ or more, is particularly preferably 0.9 g/cm$^3$ or more, and is most preferably 0.93 g/cm$^3$ or more; and is preferably 1.65 g/cm$^3$ or less, is more preferably 1.35 g/cm$^3$ or less, is further preferably 1.3 g/cm$^3$ or less, is particularly preferably 1.2 g/cm$^3$ or less, and is most preferably 1.15 g/cm$^3$ or less. When the tap density is equal to or more than the above lower limit, processibility, such as formation of streaks in the preparation of the electrode sheet, may be enhanced. In addition, the filling properties of a negative electrode material layer are enhanced and, consequently, a high-density negative electrode sheet that is easy to roll may be readily formed, that is, density can be increased. Moreover, the degree of flection of the channels through which Li ions migrate may be reduced in the resulting electrode body. Furthermore, the gaps formed between the particles included in the electrode body may have appropriate shapes. This allows smooth migration of an electrolyte solution and enhances quick charge-discharge characteristic. From the above viewpoints, the above tap density is preferably equal to or more than the above lower limit. When the above tap density is equal to or less than the above upper limit, adequate spaces are maintained on the surfaces of or inside the particles. This enhances low-temperature input-output characteristic and quick charge-discharge characteristic. From the above viewpoints, the above tap density is preferably equal to or less than the above upper limit.

The tap density is measured using a powder density gage "Tap Denser KYT-3000" (produced by SEISHIN ENTERPRISE Co., Ltd.). Specifically, a sample is charged into a 20-cc tap cell. After the cell has been fully filled with the sample, it is tapped 1000 times with a stroke length of 10 mm.

Then, the density of the sample is measured and referred to as "tap density".

<Volume Resistivity>

When the volume resistivity of the negative electrode material according to the present invention which is measured when the powder density of the negative electrode material is equal to the tap density of the negative electrode material is 0.150 $\Omega \cdot$ cm or less, Li ions can migrate inside the electrode smoothly. Furthermore, even at a lower powder density, volume resistivity is low and sufficient electrical conduction paths may be formed. This enhances low-temperature input-output characteristic, quick charge-discharge characteristic, cycle characteristic, and the like. From the above viewpoints, the above volume resistivity is preferably 0.150 $\Omega \cdot$cm or less. The above volume resistivity is more preferably 0.130 $\Omega \cdot$ cm or less, is further preferably 0.110 $\Omega \cdot$cm or less, and is particularly preferably 0.100 $\Omega \cdot$ cm or less from the above viewpoints. Although the lower limit for the above volume resistivity is not set, the volume resistivity is normally 0.010 $\Omega \cdot$ cm or more.

The volume resistivity of the negative electrode material according to the present invention is the volume resistivity determined by charging 3.0 g of the negative electrode material into a cylindrical powder resistance measurement container having a cross-sectional area of 3.14 cm$^2$, gradually increasing the pressure to increase the powder density, and measuring the volume resistivity at the time when the powder density is equal to the tap density with powder resistance measuring equipment (e.g., powder resistivity measurement systems "MCP-PD51", "Loresta-GP 4-pin type", and "MCP-T600" produced by Mitsubishi Chemical Analytech Co., Ltd.). Specifically, the following method is used.

First, the apparatus is corrected. When a correction is made for load, it is confirmed whether the load measured when the bottom of the cylindrical container into which the negative electrode material according to the present invention is to be charged is not in contact with the push rod that is inserted into the container from above and applies a pressure to the negative electrode material is 0 kgf/3.14 cm$^2$. Then, a thickness gage is corrected. The cylindrical container and the push rod are brought close to each other with a hydraulic pump. A zero-point adjustment is made such that the thickness gage reads 0.00 mm when the load is 20 kgf/3.14 cm$^2$. After the completion of the correction, 3.0 g of the negative electrode material is charged into a cylindrical container having a diameter of 2 cm. The height of the negative electrode material is adjusted such that a load is uniformly applied to the negative electrode material. The base is elevated with a hydraulic pump in order to insert the push rod into the cylindrical container. While the value read by the thickness gage is monitored, the pressure is increased to gradually increase the powder density to the tap density. The volume resistivity measured when the powder density is equal to the tap density is used. In order to reduce measurement variation, the above measurement is conducted at least twice. In the case where the measurement variation is large, the above measurement may be conducted three times and the average of two values closer to each other is used. The volume resistivity values of the negative electrode materials prepared in Examples below were also determined by the above method.

The volume resistivity of the negative electrode material according to the present invention which is measured when the powder density is 1.1 g/cm$^3$ is preferably 0.150 $\Omega \cdot$cm or less in order to form sufficient electrical conduction paths and thereby enhance low-temperature input-output characteristic, quick charge-discharge characteristic, and cycle characteristic. From the above viewpoints, the above volume resistivity is more preferably 0.100 $\Omega \cdot$ cm or less and is further preferably 0.070 $\Omega \cdot$ cm or less. Although the lower limit for the above volume resistivity is not set, the volume resistivity is normally 0.001 $\Omega \cdot$ cm or more.

The volume resistivity measured when the powder density is 1.1 g/cm$^3$ may be determined as in the above-described measurement of volume resistivity at the time when the powder density is equal to the tap density, except that the powder density at which the volume resistivity is measured is changed from a value equal to the tap density to 1.1 g/cm$^3$.

Examples of the method for adjusting the above volume resistivity to 0.150 $\Omega \cdot$ cm or less include a method in which the circularity, tap density, and particle size distribution of particles of the negative electrode material are adjusted to preferable values and a method in which the negative electrode material is mixed or combined with a conductive agent.

Examples of the conductive agent include flake graphite, carbon black, Ketjen black, carbon nanofibers, and carbon nanotubes. In the case where the carbon material is mixed with a conductive agent, the conductive agent may improve the contact between the carbon material particles and thereby reduce the above volume resistivity.

Specific examples of the method for combining the negative electrode material with the conductive agent include a method in which the conductive agent is added to the negative electrode material together with an amorphous carbon precursor serving as a binder and the resulting mixture is baked in order to bind them onto the particle surfaces; and a method in which the above components are combined with each other by a mechanochemical treatment and bound by the Van der Waals force. In the case where the carbon material is combined with the conductive agent, the dispersibility and binding capacity of the conductive agent on the surface of the carbon material may be enhanced and, consequently, volume resistivity may be reduced. Examples of the amorphous carbon precursor that can be used in this process include a petroleum-derived heavy oil produced in naphtha pyrolysis, such as ethylene heavy end; tar; pitch, such as coal pitch, coal tar pitch, petroleum pitch, or synthetic pitch; and a resin, such as vinyl chloride, vinylidene chloride, polyacrylonitrile, a phenolic resin, or an aromatic polyimide. The above organic substance precursors may be used alone or in combination of two or more.

<BET Specific Surface Area (SA)>

The specific surface area (SA) of the negative electrode material according to the present invention which is measured by the BET method is preferably 1 $m^2/g$ or more, is more preferably 2 $m^2/g$ or more, is further preferably 2.5 $m^2/g$ or more, is particularly preferably 4.5 $m^2/g$ or more, and is most preferably 5.3 $m^2/g$ or more; and is preferably 30 $m^2/g$ or less, is more preferably 20 $m^2/g$ or less, is further preferably 17 $m^2/g$ or less, and is particularly preferably 15 $m^2/g$ or less. When the SA of the negative electrode material is equal to or more than the above lower limit, the portions through which Li ions enter and exit are maintained and, consequently, the quick charge-discharge characteristic and low-temperature input-output characteristic of the lithium-ion secondary battery may be enhanced. When the SA of the negative electrode material is equal to or less than the above upper limit, the reactivity of the active material toward an electrolyte solution is not excessively high and, consequently, the side reaction between the active material and the electrolyte solution is reduced. This may limit a reduction in the initial charge-discharge efficiency of the battery and an increase in gas generation and accordingly increase the battery capacity.

The BET-SA of the negative electrode material according to the present invention may be measured using "Macsorb" produced by MOUNTECH Co., Ltd. Specifically, the sample is subjected to preliminary drying under reduced pressure in a nitrogen stream at 100°C for 3 hours. Subsequently, the temperature is reduced to liquid nitrogen temperature. The BET-SA of the sample can be measured with a nitrogen-helium gas mixture adjusted accurately such that the relative pressure of nitrogen to atmospheric pressure is 0.3, by a nitrogen adsorption BET single point method in which a gas flow method is used.

<Circularity>

The circularity of the negative electrode material according to the present invention which is determined by flow system particle image analysis is preferably 0.90 or more, is more preferably 0.91 or more, is further preferably 0.92 or more, is particularly preferably 0.93 or more, and is most preferably 0.94 or more. When the circularity of the negative electrode material is high as described above, the degree of flection of diffusion of Li ions may be reduced. This allows smooth migration of the electrolyte solution through the gaps between the particles and enhances quick charge-discharge characteristic. From the above viewpoints, the circularity of the negative electrode material is preferably high as described above. Since theoretical maximum circularity is 1, the circularity of the negative electrode material is normally less than 1, is preferably 0.99 or less, is more preferably 0.98 or less, and is further preferably 0.97 or less. If the circularity of the negative electrode material is excessively high, the negative electrode material is perfect spherical. This may reduce the contact between particles of the negative electrode material and degrade cycle characteristic.

The circularity of the negative electrode material may be determined by measuring a particle size distribution in terms of equivalent circle diameter with a flow system particle image analyzer ("FPIA-2000" produced by TOA MEDICAL ELECTRONICS CO., LTD.) and calculating the average circularity. Circularity is defined by the following formula. When particles have a circularity of 1, the particles are theoretically perfect spherical.

$$[Circularity] = [Perimeter\ of\ equivalent\ circle\ having$$
$$same\ area\ as\ projected\ shape\ of\ particle]/[Actual\ perimeter$$
$$of\ projected\ shape\ of\ particle]$$

In the measurement of circularity, ion-exchange water is used as a disperse medium, and polyoxyethylene (20) monolaurate is used as a surfactant. Equivalent circle diameter is the diameter of a circle (equivalent circle) having the same projected area as a particle image. Circularity is the ratio calculated using the perimeter of the equivalent circle as numerator and the perimeter of the projected particle image as denominator. The average of the circularities of particles having an equivalent diameter of 1.5 to 40 $\mu$m is used as circularity.

<Raman R Value>

In the present invention, Raman R value is defined as the intensity ratio ($I_B/I_A$) calculated by measuring the intensity $I_A$ of the peak $P_A$ that occurs around 1580 $cm^{-1}$ and the intensity $I_B$ of the peak $P_B$ that occurs around 1360 $cm^{-1}$ in a Raman spectrum obtained by Raman spectroscopy of the negative electrode material according to the present invention as described in Formula 2 below. Note that the expression "around 1580 $cm^{-1}$" refers to a range of 1580 to

1620 cm$^{-1}$, and the expression "around 1360 cm$^{-1}$" refers to a range of 1350 to 1370 cm$^{-1}$.

$$\text{Formula 2:}$$

$$[\text{Raman R value}] = [\text{Intensity } I_B \text{ of peak } P_B \text{ occurring}$$

$$\text{around 1360 cm}^{-1} \text{ in Raman spectral analysis}]/[\text{Intensity } I_A \text{ of}$$

$$\text{peak } P_A \text{ occurring around 1580 cm}^{-1}]$$

The Raman R value of the negative electrode material according to the present invention is preferably 0.20 or more, is more preferably 0.25 or more, is further preferably 0.30 or more, is particularly preferably 0.37 or more, and is most preferably 0.45 or more; and is normally 1.00 or less, is preferably 0.80 or less, is more preferably 0.70 or less, and is further preferably 0.650 or less. Excessively small Raman R value indicates that the crystallinity of the surface of the negative electrode material is excessively high. In such a case, ease of the intercalation and deintercalation of Li ions may be reduced and, consequently, low-temperature input-output characteristic may become degraded. If the Raman R value is excessively large, the negative impacts of the irreversible capacity of amorphous carbon and the side reaction between the negative electrode material and the electrolyte solution may be increased. This reduces the initial charge-discharge efficiency of the lithium-ion secondary battery, increases the gas generation, and consequently reduces the battery capacity.

A Raman spectrum is measured with a Raman spectrometer. Specifically, the particles that are to be measured are dropped into a measurement cell by gravity in order to charge the sample into the cell. The measurement is conducted while the inside of the measurement cell is irradiated with an argon ion laser beam and the measurement cell is rotated in a plane perpendicular to the laser beam.

Wavelength of argon ion laser beam: 514.5 nm
Laser power on sample: 25 mW
Resolution: 4 cm$^{-1}$
Measuring range: 1100 to 1730 cm$^{-1}$
Measurement of peak intensity and peak half-width: background treatment, smoothing treatment (convolution by simple averaging: 5 points)

<Volume-Average Particle Size (Average Particles Size d50) and Particle Size Distribution>

The volume-average particle size (referred to also as "average particle size d50") of the negative electrode material according to the present invention is preferably 1 $\mu$m or more, is more preferably 3 $\mu$m or more, is further preferably 4 $\mu$m or more, and is particularly preferably 5 $\mu$m or more; and is preferably 50 $\mu$m or less, is more preferably 40 $\mu$m or less, is further preferably 30 $\mu$m or less, is particularly preferably 25 $\mu$m or less, and is most preferably 20 $\mu$m or less. If the d50 of the negative electrode material is excessively small, irreversible capacity may be increased and the initial battery capacity may be reduced. If the d50 of the negative electrode material is excessively large, manufacturing troubles, such as the formation of streaks in the slurry application, the degradation of quick charge-discharge characteristic, and the degradation of low-temperature input-output characteristic may occur.

The average particle size (d50) and d90 and d10 described below are defined as average particle sizes determined by suspending 0.01 g of the composite particles in 10 mL of a 0.2-mass% aqueous solution of polyoxyethylene sorbitan monolaurate (e.g., "TWEEN 20" (registered trademark)) used as a surfactant, introducing the resulting suspension into a commercial laser diffraction/scattering particle size distribution analyzer (e.g., "LA-920" produced by HORIBA, Ltd.) as a sample, irradiating the sample with an ultrasonic wave of 28 kHz at a power of 60 W for 1 minute, and subsequently measuring the median diameter of the sample on a volume basis with the analyzer.

The d90 is the particle size at which the cumulative volume reaches 90% in a volume-particle size distribution curve drawn in ascending order in terms of particle size on the basis of the results of laser diffraction/scattering particle size distribution analysis and measured in units of micrometers. The d10 is the particle size at which the cumulative volume reaches 10% in the volume-particle size distribution curve drawn in ascending order in terms of particle size and measured in units of micrometers. d90/d10 represents the ratio of d90 to d10.

The d90 of the negative electrode material according to the present invention is preferably 100 $\mu$m or less, is more preferably 60 $\mu$m or less, is further preferably 50 $\mu$m or less, is particularly preferably 40 $\mu$m or less, and is most preferably 35 $\mu$m or less; and is preferably 5 $\mu$m or more, is more preferably 7 $\mu$m or more, and is further preferably 10 $\mu$m or more. If the d90 of the negative electrode material is excessively small, the electrode strength may be reduced.

In another case, initial charge-discharge efficiency may be reduced. If the d90 of the negative electrode material is excessively large, manufacturing troubles, such as the formation of streaks, the degradation of the quick charge-discharge characteristic of the battery, and the degradation of the low-temperature input-output characteristic of the battery may occur.

The d10 of the negative electrode material according to the present invention is preferably 1 $\mu$m or more, is more preferably 2 $\mu$m or more, is further preferably 3 $\mu$m or more, and is particularly preferably 4 $\mu$m or more; and is preferably 20 $\mu$m or less, is more preferably 15 $\mu$m or less, is further preferably 12 $\mu$m or less, is particularly preferably 10 $\mu$m or less, and is most preferably 8 $\mu$m or less. If the d10 of the negative electrode material is excessively small, manufacturing troubles, such as an increase in slurry viscosity, may occur. Furthermore, reductions in electrode strength and initial charge-discharge efficiency may occur. If the d10 of the negative electrode material is excessively large, the degradation of the quick charge-discharge characteristic of the battery and the degradation of the low-temperature input-output characteristic of the battery may occur.

The d90/d10 of the negative electrode material according to the present invention is preferably 1.0 or more, is more preferably 2.0 or more, is further preferably 2.5 or more, and is particularly preferably 3.0 or more. When the ratio d90/d10 falls within the above range, smaller particles enter the gaps formed between larger particles to improve the contact between the particles. This improves the electrical conduction paths, reduces volume resistivity, and improves quick charge-discharge characteristic, low-temperature input-output characteristic, and cycle characteristic.

[Production Method]

The method for producing the negative electrode material for nonaqueous secondary batteries according to the present invention may be any method capable of producing a negative electrode material that includes the graphite including amorphous carbon deposited on at least a part of the surface of the graphite and has the predetermined density index ($D_{r-t}$). Such a negative electrode material may be produced by, for example, mixing an amorphous carbon precursor (raw material for amorphous carbon) with spherical graphite that has been subjected to a spheronization treatment and baking the resulting mixture. It is preferable that the conductive agent be combined with the negative electrode material. Specifically, the density index ($D_{r-t}$) may be adjusted to be equal to or less than the specific value by using, for example, the following approaches in an appropriate combination: 1) adjusting the above- or below-described tap density, circularity, particle size distribution, etc. of the spherical graphite that has been subjected to a spheronization treatment or the graphite including amorphous carbon deposited on at least a part of the surface of the graphite to be within the respective preferable ranges described above or below; and 2) using the carbon microparticles described below as a conductive agent and attaching the carbon microparticles to the graphite particles while the aggregates of the carbon microparticles are disintegrated at an adequate degree.

<Graphite Particles>

The graphite particles (raw material) used for producing the negative electrode material according to the present invention are preferably selected from the following types of graphite particles and preferably have the following physical properties. Note that the conditions under which the physical properties of the graphite particles (raw material) are measured and the definitions of the physical properties of the graphite particles (raw material) are the same as described above in the description of graphite unless otherwise specified.

The type of the graphite particles (raw material) is not limited; either natural or artificial graphite may be used. As natural graphite, any of flake graphite, lump graphite, amorphous graphite, etc. may be used. Graphite that does not contain high impurities is preferable. The graphite particles are preferably subjected to a publicly known refining treatment as needed. Examples of the artificial graphite include graphite produced by baking an organic substance, such as coal tar pitch, a coal-derived heavy oil, atmospheric residue, a petroleum-derived heavy oil, an aromatic hydrocarbon, a nitrogen-containing cyclic compound, a sulfur-containing cyclic compound, polyphenylene, polyvinyl chloride, polyvinyl alcohol, polyacrylonitrile, polyvinyl butyral, a natural high-molecular weight compound, polyphenylene sulfide, polyphenylene oxide, a furfuryl alcohol resin, a phenolformaldehyde resin, or an imide resin, normally at 2500°C or more and 3200°C or less. In this graphitization process, a silicon-containing compound, a boron-containing compound, or the like may be used as a graphitization catalyst.

The crystallinity (degree of graphitization) of the graphite particles is normally such that the spacing (d002) of the (002) plane measured by the wide-angle X-ray diffraction method is 0.335 nm or more and less than 0.340 nm. The d002 value is preferably 0.338 nm or less, is more preferably 0.337 nm or less, and is further preferably 0.336 nm or less.

In particular, the shape of the graphite particles (raw material) is preferably spherical (spherical graphite) from the viewpoint of quick charge-discharge characteristic. Spherical graphite particles may be produced by performing a spheronization treatment using a publicly known technique as a method for spheroidizing the graphite particles. The above treatment may be performed using, for example, an apparatus capable of repeatedly applying a mechanical action that is primarily an impact force as well as a compressive force, a frictional force, a shear force, and the like due to the interaction between the particles and the like, to the particles. Specifically, an apparatus that includes a rotor provided with a number of blades disposed inside the casing and performs a surface treatment by rotating the rotor at a high speed and thereby applying a mechanical action, such as an impact, compressive, frictional, or shear force, to the carbon material introduced into the inside thereof is preferable. The apparatus preferably has a mechanism that causes the graphite particles to circulate and allows the mechanical action to be repeatedly applied to the graphite particles. Specific examples of such an apparatus include "Hybridization System" (produced by Nara Machinery Co., Ltd.), "KRYPTRON" (produced by Earth Technica Co., Ltd.), "CF Mill" (produced by Ube Industries, Ltd.), "MECHANO FUSION System" (produced by Hosokawa Micron Corporation), and "Theta Composer" (produced by TOKUJU Co., LTD.). Among these, "Hybridization System" produced by Nara Machinery Co., Ltd. is preferable. For example, in the case where the above treatment is performed using the above-described apparatus, normally, the circumferential velocity of the rotor is preferably set, but not limited, to 30 to 100 m/sec, is more preferably set to 40 to 100 m/sec, and is further preferably set to 50 to 100 m/sec. Although the treatment can be performed by only passing the carbonaceous substance through the apparatus, it is preferable to perform the treatment by circulating or retaining the carbonaceous substance inside the apparatus for 30 seconds or more. It is more preferable to perform the treatment by circulating or retaining the carbonaceous substance inside the apparatus for 1 minute or more.

(Circularity)

The circularity (1.5 to 40 $\mu$m) of the graphite particles (raw material) used as a raw material for the negative electrode material according to the present invention which is measured by flow system particle image analysis is preferably 0.90 or more, is more preferably 0.91 or more, is further preferably 0.92 or more, is particularly preferably 0.93 or more, and is most preferably 0.94 or more. The circularity (10 to 40 $\mu$m) of the graphite particles (raw material) is preferably 0.88 or more, is more preferably 0.89 or more, is further preferably 0.90 or more, is particularly preferably 0.91 or more, and is most preferably 0.92 or more. When the graphite particles (raw material) have such a high circularity, the degree of flection of diffusion of Li ions in the negative electrode material prepared using the graphite particles may be reduced. This allows smooth migration of the electrolyte solution through the gaps between the particles and enhances quick charge-discharge characteristic. From the above viewpoints, the graphite particles (raw material) preferably have a high circularity. Since theoretical maximum circularity is 1, the circularity (1.5 to 40 $\mu$m) of the graphite particles (raw material) is normally less than 1, is preferably 0.99 or less, is more preferably 0.98 or less, and is further preferably 0.97 or less. The circularity (10 to 40 $\mu$m) of the graphite particles (raw material) is normally less than 1, is preferably 0.99 or less, is more preferably 0.98 or less, and is further preferably 0.97 or less. If the circularity of the graphite particles (raw material) is excessively high, the graphite particles (raw material) are perfect spherical. This may reduce the contact between particles of the negative electrode material prepared using the graphite particles and degrade cycle characteristic.
The circularity of the graphite particles (raw material) may be determined by measuring the particle size distribution of the graphite particles in terms of equivalent circle diameter with a flow system particle image analyzer ("FPIA-2000" produced by TOA MEDICAL ELECTRONICS CO., LTD.) and calculating the average circularity. Circularity is defined by the following formula. When particles have a circularity of 1, the particles are theoretically perfect spherical.

$$[\text{Circularity}] = [\text{Perimeter of equivalent circle having same area as projected shape of particle}]/[\text{Actual perimeter of projected shape of particle}]$$

In the measurement of circularity, ion-exchange water is used as a disperse medium, and polyoxyethylene (20) monolaurate is used as a surfactant. Equivalent circle diameter is the diameter of a circle (equivalent circle) having the same projected area as a particle image. Circularity is the ratio calculated using the perimeter of the equivalent circle as numerator and the perimeter of the projected particle image as denominator. The average of the circularities of particles having an equivalent diameter of 1.5 to 40 $\mu$m is used as circularity (1.5 to 40 $\mu$m). The average of the circularities of particles having an equivalent diameter of 10 to 40 $\mu$m is used as circularity (10 to 40 $\mu$m).

(Volume Resistivity)

The volume resistivity of the graphite particles (raw material) according to the present invention which is measured by the above-described method when the powder density is 1.1 g/cm$^3$ is preferably 0.150 $\Omega \cdot$ cm or less, is more preferably 0.100 Ω · cm or less, is further preferably 0.070 Ω · cm or less, is particularly preferably 0.060 Ω·cm or less, and is most preferably 0.050 Ω · cm or less. Although the lower limit for the above volume resistivity is not set, the above volume resistivity is normally 0.001 Ω · cm or more. When the volume resistivity of the graphite particles measured when the powder density is 1.1 g/cm$^3$ falls within the above range, the negative electrode material produced using the graphite particles is capable of forming sufficient electrical conduction paths. This enhances low-temperature input-output characteristic, quick charge-discharge characteristic, and cycle characteristic. Therefore, it is preferable that the volume resistivity of the graphite particles measured when the powder density is 1.1 g/cm$^3$ fall within the above range.

(Tap Density)

The tap density of the graphite particles (raw material) is preferably 0.6 g/cm$^3$ or more, is more preferably 0.7 g/cm$^3$ or more, is further preferably 0.8 g/cm$^3$ or more, is particularly preferably 0.85 g/cm$^3$ or more, and is most preferably 0.9 g/cm$^3$ or more; and is normally 1.6 g/cm$^3$ or less, is preferably 1.5 g/cm$^3$ or less, and is more preferably 1.4 g/cm$^3$ or less.

(Volume-Average Particle Size (Average Particle Size d50))

The volume-average particle size (d50) of the graphite particles (raw material) is normally, but not limited to, 1 μm or more, is preferably 3 μm or more, and is more preferably 5 μm or more; and is normally 100 μm or less, is preferably 50 μm or less, and is more preferably 40 μm or less.

(d90, d10, and d90/d10)

The d90 of the graphite particles (raw material) used as a raw material for the negative electrode material according to the present invention is preferably 100 μm or less, is more preferably 60 μm or less, is further preferably 50 μm or less, is particularly preferably 40 μm or less, and is most preferably 35 μm or less; and is preferably 5 μm or more, is more preferably 7 μm or more, and is further preferably 10 μm or more.

The d10 of the graphite particles (raw material) used as a raw material for the negative electrode material according to the present invention is preferably 1 μm or more, is more preferably 2 μm or more, is further preferably 3 μm or more, and is particularly preferably 4 μm or more; and is preferably 20 μm or less, is more preferably 15 μm or less, is further preferably 12 μm or less, is particularly preferably 10 μm or less, and is most preferably 8 μm or less.

The d90/d10 of the graphite particles (raw material) used as a raw material for the negative electrode material according to the present invention is preferably 1.0 or more, is more preferably 2.0 or more, is further preferably 3.0 or more, and is particularly preferably 4.0 or more.

When the d90, d10, and d90/d10 of the graphite particles (raw material) used as a raw material for the negative electrode material according to the present invention fall within the respective ranges, it becomes possible to adjust the d90, d10, and d90/d10 of the negative electrode material produced using the graphite particles to be within the respective preferable ranges described above. Consequently, the contact between particles of the negative electrode material may be enhanced and the electrical conduction paths may be improved accordingly. This may reduce volume resistivity and improve quick charge-discharge characteristic, low-temperature input-output characteristic, and cycle characteristic.

(BET Specific Surface Area)

The BET specific surface area of the graphite particles (raw material) is normally, but not limited to, 1 m$^2$/g or more, is preferably 1.5 m$^2$/g or more, is more preferably 2 m$^2$/g or more, is further preferably 3 m$^2$/g or more, is particularly preferably 4.5 m$^2$/g or more, and is most preferably 5.1 m$^2$/g or more; and is normally 20 m$^2$/g or less, is preferably 15 m$^2$/g or less, and is more preferably 10 m$^2$/g or less.

(Raman R Value)

The Raman R value of the graphite particles (raw material) which is represented by Formula 2 below is preferably, but not limited to, 0.10 or more and 1 or less. The Raman R value of the graphite particles is more preferably 0.15 or more, is further preferably 0.20 or more, and is particularly preferably 0.25 or more; and is more preferably 0.8 or less and is further preferably 0.6 or less.

Formula 2:

$$[\text{Raman R value}] = [\text{Intensity } I_B \text{ of peak } P_B \text{ occurring around } 1360 \text{ cm}^{-1} \text{ in Raman spectral analysis}]/[\text{Intensity } I_A \text{ of peak } P_A \text{ occurring around } 1580 \text{ cm}^{-1}]$$

<Amorphous Carbon Precursor>

The negative electrode material according to the present invention includes the graphite including amorphous carbon deposited on at least a part of the surface of the graphite. The amorphous carbon is formed by baking an amorphous carbon precursor (raw material for amorphous carbon).

Examples of the amorphous carbon precursor include, but are not limited to, the following organic substances: coal-derived heavy oils, such as coal tar, coal tar pitch, and a pyrolysis oil; straight-run heavy oils, such as atmospheric residue and vacuum residue; petroleum-derived heavy oils, such as a degradative heavy oil, such as ethylene tar, which is produced by the pyrolysis of crude oil, naphtha, or the like as a by-product; aromatic hydrocarbons, such as acenaphthylene, decacyclene, and anthracene; nitrogen-containing cyclic compounds, such as fenadine and acridine; sulfur-containing cyclic compounds, such as thiophene; aliphatic cyclic compounds, such as adamantane; and thermoplastic high-molecular weight compounds, such as polyphenylene (e.g., biphenyl or terphenyl), polyvinyl ester (e.g., polyvinyl chloride, polyvinyl acetate, or polyvinyl butyral), and polyvinyl alcohol. The above organic substance precursors may be used alone or in combination of two or more.

<Conductive Agent>

The negative electrode material according to the present invention preferably further includes carbon microparticles that serve as a conductive agent and are combined with the surface of the negative electrode material from the viewpoints of contact between the particles and volume resistivity. The primary particle size of the carbon microparticles (raw material) that are used for producing the negative electrode material according to the present invention and combined with the negative electrode material as a conductive agent (hereinafter, these carbon microparticles may be referred to simply as "carbon microparticles (raw material)") is preferably 3 nm or more and is more preferably 15 nm or more; and is preferably 500 nm or less, is more preferably 200 nm or less, is further preferably 100 nm or less, is particularly preferably 70 nm or less, and is most preferably 30 nm or less. The primary particle size of the carbon microparticles may be measured by, for example, observation using an electron microscope, such as SEM, or with a laser diffraction particle size distribution analyzer. When the primary particle size of the "carbon microparticles (raw material)" falls within the above range, a low volume resistivity and the formation of sufficient electrical conduction paths may be achieved even at a lower powder density. In addition, Li ions can migrate inside the electrode smoothly. This may enhance low-temperature input-output characteristic, quick charge-discharge characteristic, and cycle characteristic.

The type of the carbon microparticles (raw material) is not limited. Examples of the carbon microparticles (raw material) include flake graphite, coal dust, a gas-phase carbon powder, carbon black, Ketjenblack, carbon nanofibers, and carbon nanotubes. Among these, carbon black is particularly preferable. When carbon black particles are used as carbon microparticles (raw material), input-output characteristic is enhanced even at low temperatures. Furthermore, carbon black is not expensive and readily available. The shape of the carbon microparticles (raw material) is not limited. The carbon microparticles may have any shape, such as particulate, spherical, chain-like, needle-like, fiber-like, plate-like, and flake-like.

The BET specific surface area of the carbon microparticles (raw material) is normally, but not limited to, 1 $m^2/g$ or more, is preferably 10 $m^2/g$ or more, and is more preferably 30 $m^2/g$ or more; and is normally 1000 $m^2/g$ or less, is preferably 500 $m^2/g$ or less, is more preferably 120 $m^2/g$ or less, is further preferably 100 $m^2/g$ or less, and is particularly preferably 70 $m^2/g$ or less.

The bulk density of the carbon microparticles (raw material) is normally, but not limited to, 0.01 $g/cm^3$ or more, is preferably 0.1 $g/cm^3$ or more, is more preferably 0.15 $g/cm^3$ or more, and is further preferably 0.17 $g/cm^3$ or more; and is normally 1 $g/cm^3$ or less, is preferably 0.8 $g/cm^3$ or less, and is more preferably 0.6 $g/cm^3$ or less.

The tap density of the carbon microparticles (raw material) is normally, but not limited to, 0.1 $g/cm^3$ or more, is preferably 0.15 $g/cm^3$ or more, and is more preferably 0.2 $g/cm^3$ or more; and is normally 2 $g/cm^3$ or less, is preferably 1 $g/cm^3$ or less, and is more preferably 0.8 $g/cm^3$ or less.

The DBP oil absorption of the carbon microparticles (raw material) is preferably low as described above. The oil absorption of the carbon microparticles is preferably 330 mL/100 g or less, is more preferably 170 mL/100 g or less, and is further preferably 100 mL/100 g or less. Although the lower limit is not set, the oil absorption of the carbon microparticles is normally 10 mL/100 g or more, is preferably 50 mL/100 g or more, and is more preferably 60 mL/100 g or more.

<Combination of Graphite with Conductive Agent>

Examples of the method for combining the graphite with the conductive agent include a method in which the conductive agent is added to the graphite together with the amorphous carbon precursor serving as a binder and the resulting mixture is baked in order to bind them onto the particle surfaces; and a method in which the above components are combined with each other by a mechanochemical treatment and bound by the Van der Waals force. In the case where the carbon material is combined with the conductive agent, the dispersibility and binding capacity of the conductive agent on the graphite surface may be enhanced and, consequently, the volume resistivity may be reduced.

In order to further enhance the dispersibility and binding capacity of the conductive agent on the graphite surface and further reduce volume resistivity, it is preferable to select a production method with consideration of the viewpoints (1) and (2) below. Examples of the amorphous carbon precursor are the same as described above.

(1) Attach the carbon microparticles to the graphite particles while the aggregates of the carbon microparticles are disintegrated at an adequate degree

The above-described carbon microparticles are likely to be in the form of secondary particle aggregates because the cohesive force that acts between the primary particles is strong. It is preferable that the carbon microparticles be deposited on the graphite particles while the secondary particles are disintegrated at an adequate degree in order to form sufficient electrical conduction paths and allow smooth migration of Li ions. If the carbon microparticles are deposited on the graphite particles while the secondary particles are not disintegrated at a sufficient level, the number of carbon microparticles that effectively act as a conductive agent may be reduced. If the carbon microparticles are deposited on the graphite particles while the secondary particles are disintegrated at an excessive level, the structure of the carbon microparticles may become impaired. Thus, in both cases, the formation of electrical conduction paths or the migration of Li ions may become impaired.

Even when the carbon microparticles are disintegrated alone before use, they again aggregate with one another and form secondary particles when they are mixed with the graphite particles. Therefore, it is preferable to use the production method described below in order to enable the carbon microparticles to be deposited on the graphite particles while the carbon microparticles are disintegrated at an adequate degree and uniformly combined with the surface of the graphite particles and thereby achieve the formation of sufficient electrical conduction paths and smooth migration of Li ions.

For attaching the carbon microparticles to the graphite particles before the carbon microparticles become aggregated, that is, while the carbon microparticles are in the form of primary particles, it is preferable to use an apparatus that includes not only a mixing mechanism with which the graphite particles and the carbon microparticles are mixed with each other and stirred but also a disintegrating mechanism with which the graphite particles and the carbon microparticles are disintegrated, that is, "disintegrator mixer", as an apparatus for mixing the graphite particles with the carbon microparticles. Using the above disintegrator mixer for mixing the graphite particles with the carbon microparticles enables the graphite particles and the carbon microparticles to be uniformly mixed with each other while the aggregates of the graphite particles and the carbon microparticles are disintegrated. Uniformly mixing the graphite particles and the carbon microparticles with each other before they are combined with each other while the aggregates of the graphite particles and the carbon microparticles are disintegrated at a sufficient degree also reduces the likelihood of the carbon microparticles aggregating in the subsequent steps.

(2) Use carbon microparticles having low oil absorption as carbon microparticles Using carbon microparticles having low oil absorption reduces the likelihood of the carbon microparticles again aggregating to form secondary particle aggregates when they are mixed with the graphite particles and the amorphous carbon precursor. As a result, appropriate dispersion of the carbon microparticles may be maintained. This enables the formation of sufficient electrical conduction paths and smooth migration of Li ions. Thus, it is preferable to use carbon microparticles having low oil absorption.

Examples of the production method in which the viewpoints (1) and (2) above are taken into consideration include a production method that includes a step of attaching the carbon microparticles to the graphite particles by dry process while disintegrating the carbon microparticles to an adequate degree; and a step of mixing the carbon microparticle-deposited graphite particles prepared in the above step with an organic substance used as an amorphous carbon precursor and subsequently performing a baking treatment.

The step of attaching the carbon microparticles to the graphite particles by dry process while disintegrating the carbon microparticles to an adequate degree is conducted by, for example, a method in which the carbon microparticles and the graphite particles are mixed with each other by dry blending using the disintegrator mixer described below or the like. In this step, primary particles of the carbon microparticles which have been disintegrated to an adequate degree are attached to the graphite particles. After the primary particles of the carbon microparticles have been attached to the graphite particles, the graphite particles are mixed with an organic substance used as an amorphous carbon precursor. Subsequently, baking is performed. The temperature at which baking is performed is described in detail below and is preferably 2600°C or less.

It is preferable to use carbon microparticles having low oil absorption. The oil absorption of the carbon microparticles is preferably 330 mL/100 g or less, is more preferably 170 mL/100 g or less, and is further preferably 100 mL/100 g or less.

Whether the carbon microparticles are uniformly dispersed may be determined by an Hg porosimetry analysis described below. Specifically, an increase in the volume of micropores having a size of 200 nm or less which occurs when the carbon microparticles are attached to the graphite particles and determined by Hg porosimetry is preferably 50% or more, is more preferably 100% or more, and is further preferably 200% or more. The above-described method may be used as a measuring method in which Hg porosimetry is used. The increase in the volume of the micropores may be determined by measuring the volume of micropores having a size of 200 nm or less which is included in a carbon material produced using the carbon microparticles and the volume of micropores having a size of 200 nm or less which is included in a carbon material produced without using the carbon microparticles in the production of the carbon material and calculating an increase in the micropore volume.

The mixing ratio between the graphite particles and the "carbon microparticles" at which the graphite particles and the carbon microparticles are mixed with each other is selected appropriately in accordance with the intended composition of the composite particles. The amount of the "carbon microparticles" relative to 100 parts by mass of the "graphite particles" is normally 0.01 parts by mass, is preferably 0.1 parts by mass, and is more preferably 0.15 parts by mass; and is normally 20 parts by mass, is preferably 10 parts by mass, is more preferably 5 parts by mass or less, and is further preferably 2.9 parts by mass or less. When the above mixing ratio falls within the above range, the characteristics required by lithium-ion secondary batteries, such as the charge-discharge efficiency and discharge capacity of the battery, may be satisfied. In addition, input-output characteristic may be enhanced even at low temperatures.

The mixing proportion of the amorphous carbon precursor at which the amorphous carbon precursor is mixed with the powder mixture of the "graphite particles" and the "carbon microparticles" is selected appropriately in accordance with the intended composition of the composite particles. The amount of the amorphous carbon precursor relative to 100 parts by mass of the "graphite particles" is, as carbon residue, normally 0.01 parts by mass or more, is preferably 0.1 parts by mass or more, is more preferably 0.5 parts by mass or more, and is further preferably 1 part by mass or more; and is normally 60 parts by mass or less, is preferably 30 parts by mass or less, is more preferably 20 parts by mass or less, is further preferably 10 parts by mass or less, and is particularly preferably 5 parts by mass or less. When the above mixing proportion falls within the above range, the charge-discharge efficiency and discharge capacity of the battery may be satisfied. In addition, input-output characteristic may be enhanced even at low temperatures.

In the case where the amorphous carbon precursor is mixed with a powder mixture of the "graphite particles" and the "carbon microparticles" and a heat treatment is performed in an inert gas, the conditions under which the heat treatment is performed are not limited. The temperature at which the heat treatment is performed is normally 600°C or more, is preferably 800°C or more, is more preferably 900°C or more, and is further preferably 1000°C or more; and is normally 2600°C or less, is preferably 2200°C or less, is more preferably 1800°C or less, and is further preferably 1500°C or less. The amount of time during which the heat treatment is performed may be set such that the amorphous carbon precursor can be completely converted to amorphous carbon and is normally 10 minutes to 24 hours. When the above factors fall within the respective ranges, in the case where the negative electrode material is used as a negative electrode active material included in a nonaqueous electrolyte solution secondary battery, the input-output characteristic of the nonaqueous electrolyte solution secondary battery at low temperatures may be markedly improved. Examples of the inert gas include nitrogen and argon.

In the case where a disintegrator mixer is used for mixing the "graphite particles" with the "carbon microparticles", the type of the mixer is not limited specifically and commercially available mixers, such as a rocking mixer, a Lodige mixer, and a Henschel mixer, may be used. The conditions under which disintegration and mixing are performed are not limited. The rotational speed of the disintegration propeller (chopper) is normally 100 rpm or more, is preferably 1000 rpm or more, and is more preferably 2000 rpm or more; and is normally 100000 rpm or less, is preferably 30000 rpm or less, and is further preferably 10000 rpm or less. The amount of time during which the disintegration and mixing are performed is normally 30 seconds or more, is preferably 1 minute or more, and is more preferably 2 minutes or more; and is normally 24 hours or less, is preferably 3 hours or less, is more preferably 1 hour or less, and is further preferably 15 minutes or less. When the above factors fall within the above respective ranges, the aggregates of the carbon microparticles may become disintegrated to an adequate degree and the aggregation of the "graphite particles" and the "carbon microparticles" may be reduced with effect.

In the production of the carbon material according to the present invention, the composite particles produced by the above-described production method may optionally be subjected to another pulverizing treatment.

Examples of a coarse crusher used in the pulverizing treatment include a jaw crusher, an impact crusher, and a cone crusher. Examples of an intermediate crusher used in the pulverizing treatment include a roll crusher and a hammer mill. Examples of a pulverizer used in the pulverizing treatment include a ball mill, a vibration mill, a pin mill, a stirred mill, and a jet mill. Among these, a ball mill, a vibration mill, and the like are preferable from the viewpoint of processing speed because they require only short time to perform pulverization.

The speed at which the pulverizing treatment is performed may be set appropriately in accordance with the type and size of the apparatus used. For example, in the case where a ball mill is used, the above pulverization speed is normally 50 rpm or more, is preferably 100 rpm or more, is more preferably 150 rpm or more, and is further preferably 200 rpm or more; and is normally 2500 rpm or less, is preferably 2300 rpm or less, and is more preferably 2000 rpm or less. If the pulverization speed is excessively high, it may become difficult to control particle size. If the pulverization speed is excessively low, the processing speed may be reduced.

The amount of time during which the pulverizing treatment is performed is normally 30 seconds or more, is preferably 1 minute or more, is more preferably 1 minute 30 seconds or more, and is further preferably 2 minutes or more; and is normally 3 hours or less, is preferably 2.5 hours or less, and is more preferably 2 hours or less. If the above pulverization time is excessively short, it may become difficult to control particle size. If the pulverization time is excessively long, productivity may become degraded.

In the case where a vibration mill is used, the pulverization speed is normally 50 rpm or more, is preferably 100 rpm or more, is more preferably 150 rpm or more, and is further preferably 200 rpm or more; and is normally 2500 rpm or less, is preferably 2300 rpm or less, and is more preferably 2000 rpm or less. If the pulverization speed is excessively high, it may become difficult to control particle size. If the pulverization speed is excessively low, the processing speed may be reduced.

The pulverization time is normally 30 seconds or more, is preferably 1 minute or more, is more preferably 1 minute 30 seconds or more, and is further preferably 2 minutes or more; and is normally 3 hours or less, is preferably 2.5 hours or less, and is more preferably 2 hours or less. If the pulverization time is excessively short, it may become difficult to control particle size. If the pulverization time is excessively long, productivity may become degraded.

In the production of the carbon material according to the present invention, the composite particles produced by the above-described production method may be subjected to a particle-size classification treatment. As for the conditions under which the classification treatment is performed, the size of openings of a screen used in the classification treatment is normally 53 $\mu$m or less, is preferably 45 $\mu$m or less, and is more preferably 38 $\mu$m or less.

The apparatus used in the classification treatment is not limited. For example, in the case where dry sieving is performed, the following devices may be used: a rotary sieve, a shaking sieve, an oscillating sieve, and a vibrating sieve. In the case where dry air-flow classification is performed, the following devices may be used: a gravitational classifier, an inertial classifier, and a centrifugal classifier (e.g., classifier and cyclone). In the case where wet sieving is performed, the following devices may be used: a wet mechanical classifier, a hydraulic classifier, a settling classifier, and a wet centrifugal classifier.

{Negative Electrode for Nonaqueous Secondary Batteries}

A negative electrode for nonaqueous secondary batteries according to the present invention (hereinafter, may be referred to as "negative electrode according to the present invention") includes a current collector and an active material layer disposed on the current collector. The active material layer includes the negative electrode material according to the present invention.

The negative electrode may be prepared using the negative electrode material according to the present invention by mixing the negative electrode material with a binder resin, adding the resulting mixture to an aqueous or organic medium to form a slurry, applying the slurry to a current collector after adding a thickener to the slurry as needed, and drying the slurry deposited on the current collector.

The binder resin is preferably stable in a nonaqueous electrolyte solution and insoluble in water. Examples of the binder resin include rubber-like high-molecular weight compounds, such as a styrene-butadiene rubber, an isoprene rubber, and an ethylene-propylene rubber; synthetic resins, such as polyethylene, polypropylene, polyethylene terephthalate, polyimide, polyacrylic acid, and aromatic polyamide; thermoplastic elastomers, such as a styrene-butadiene-styrene block copolymer, and hydrogenated products thereof, a styrene-ethylene-butadiene-styrene copolymer, styrene-isoprene, a styrenic block copolymer, and hydrides thereof; soft resin-like high-molecular weight compounds, such as syndiotactic-1,2-polybutadiene, an ethylene-vinyl acetate copolymer, and a copolymer of ethylene with an $\alpha$-olefin having 3 to 12 carbon atoms; and fluorinated high-molecular weight compounds, such as a polytetrafluoroethylene-ethylene copolymer, polyvinylidene fluoride, polypentafluoropropylene, and polyhexafluoropropylene. Examples of the organic medium include N-methylpyrrolidone and dimethylformamide.

The amount of the binder resin used relative to 100 parts by weight of the negative electrode material is normally 0.1 parts by weight or more and is preferably 0.2 parts by weight or more. Limiting the amount of the binder resin used relative to 100 parts by weight of the negative electrode material to be 0.1 parts by weight or more increases the binding force among the particles of the negative electrode material and the binding force between the negative electrode material and the current collector to a sufficient level and consequently limits a reduction in the battery capacity and the degradation of recycle characteristic which may occur when the negative electrode material becomes detached from the negative electrode.

The amount of the binder resin used relative to 100 parts by weight of the negative electrode material is preferably 10 parts by weight or less and is more preferably 7 parts by weight or less. Limiting the amount of the binder resin used relative to 100 parts by weight of the negative electrode material to be 10 parts by weight or less limits a reduction in the capacity of the negative electrode and prevents troubles, such as the hindrance of entry and exit of alkali ions, such as lithium ions, to and from the negative electrode material.

Examples of the thickener added to the slurry include water-soluble celluloses, such as carboxymethyl cellulose, methyl cellulose, hydroxyethyl cellulose, and hydroxypropyl cellulose, polyvinyl alcohol, and polyethylene glycol. Among these, carboxymethyl cellulose is preferable. It is preferable to use the thickener such that the amount of the thickener is normally 0.1 to 10 parts by weight and is particularly preferably 0.2 to 7 parts by weight relative to 100 parts by weight of the negative electrode material.

Examples of the negative electrode current collector include copper, copper alloy, stainless steel, nickel, titanium, and carbon, which are known as a material for negative electrode current collectors in the related art. The shape of the current collector is normally sheet-like. Alternatively, a sheet-like current collector having irregularities formed in the surface, a net-like current collector, a current collector composed of perforated metal, and the like are also preferably used.

It is preferable to perform pressurization after the slurry of the negative electrode material and the binder resin has been applied to the current collector and dried in order to increase the density of the active material layer formed on the current collector and the battery capacity per unit volume of the negative electrode active material layer. The density of the active material layer is preferably 1.2 to 1.8 $g/cm^3$ and is more preferably 1.3 to 1.6 $g/cm^3$. Setting the density of the active material layer to be equal to or more than the above lower limit limits a reduction in the battery capacity which occurs when the electrode thickness is increased. Setting the density of the active material layer to be equal to or less than the above upper limit reduces the likelihood of the mobility of alkali ions, such as lithium ions, being reduced as a result of the amount of the electrolyte solution retained in the gaps created between the particles inside the electrode being reduced due to a reduction in the amount of gaps and thereby limits the degradation of quick charge-discharge properties.

The pore capacity of the negative electrode active material layer formed using the negative electrode material according to the present invention which is measured by a mercury intrusion method in a range of 10 to 100000 nm is preferably 0.05 mL/g and is more preferably 0.1 mL/g or more. Setting the above pore capacity to be 0.05 mL/g or more increases the area of the portions through which alkali ions, such as lithium ions, enter and exit.

{Nonaqueous Secondary Battery}

A nonaqueous secondary battery according to the present invention is a nonaqueous secondary battery that includes a positive and negative electrodes and an electrolyte. The negative electrode is the negative electrode according to the present invention. In particular, the positive and negative electrodes included in the nonaqueous secondary battery according to the present invention are preferably normally capable of occluding and releasing Li ions. That is, the nonaqueous secondary battery according to the present invention is preferably a lithium-ion secondary battery.

The nonaqueous secondary battery according to the present invention may be produced by a conventional method, except that the above-described negative electrode according to the present invention is used. In particular, in the production of the nonaqueous secondary battery according to the present invention, the ratio [Negative electrode capacity]/[Positive electrode capacity] is preferably set to 1.01 to 1.5 and is more preferably set to 1.2 to 1.4.

[Positive Electrode]

Examples of a positive electrode material that serves as a positive electrode active material included in the nonaqueous secondary battery according to the present invention include lithium transition metal composite oxides, such as a lithium cobalt composite oxide having a fundamental composition represented by $LiCoO_2$, a lithium nickel composite oxide having a fundamental composition represented by $LiNiO_2$, and a lithium manganese composite oxide having a fundamental composition represented by $LiMnO_2$ or $LiMn_2O_4$; transition metal oxides, such as manganese dioxide; and mixtures of the above composite oxides. $TiS_2$, $FeS_2$, $Nb_3S_4$, $Mo_3S_4$, $CoS_2$, $V_2O_5$, $CrO_3$, $V_3O_3$, $FeO_2$, $GeO_2$, and $LiNi_{0.33}Mn_{0.33}CO_{0.33}O_2$, $LiFePO_4$, and the like may also be used.

The positive electrode may be produced by mixing the positive electrode material with a binder resin, adding the resulting mixture to an appropriate solvent to form a slurry, applying the slurry to a current collector, and drying the slurry deposited on the current collector. It is preferable to add a conductive agent, such as acetylene black or Ketjenblack, to the slurry. A thickener may optionally be added to the slurry as needed. The binder and the thickener may be selected from the binders and thickeners known as those used in this application, such as the above-described examples of the binder and thickener used in the production of the negative electrode.

The amount of the conductive agent used relative to 100 parts by weight of the positive electrode material is preferably 0.5 to 20 parts by weight and is more preferably 1 to 15 parts by weight. The amount of the thickener used relative to 100 parts by weight of the positive electrode material is preferably 0.2 to 10 parts by weight and is more preferably 0.5 to 7 parts by weight. In the case where the slurry is formed by adding the binder resin to water, the amount of the binder resin used relative to 100 parts by weight of the positive electrode material is preferably 0.2 to 10 parts by weight and is more preferably 0.5 to 7 parts by weight. In the case where the slurry is formed by adding the binder resin to an organic solvent capable of dissolving the binder resin, such as N-methylpyrrolidone, the amount of the binder resin used relative to 100 parts by weight of the positive electrode material is preferably 0.5 to 20 parts by weight and is more preferably 1 to 15 parts by weight.

Examples of the material for the positive electrode current collector include aluminum, titanium, zirconium, hafnium, niobium, tantalum, and alloys thereof. Among these, aluminum, titanium, tantalum, and alloys thereof are preferable. Aluminum and alloys thereof are most preferable.

[Electrolyte Solution]

The electrolyte solution may be an electrolyte solution prepared by dissolving an appropriate lithium salt in a known nonaqueous solvent.

Examples of the nonaqueous solvent include cyclic carbonates, such as ethylene carbonate, fluoroethylene carbonate, propylene carbonate, butylene carbonate, and vinylene carbonate; chain carbonates, such as dimethyl carbonate, ethylmethyl carbonate, and diethyl carbonate; cyclic esters, such as $\gamma$-butyrolactone; cyclic ethers, such as crown ether, 2-methyltetrahydrofuran, tetrahydrofuran, 1,2-dimethyltetrahydrofuran, and 1,3-dioxolane; and chain ethers, such as 1,2-dimethoxyethane. The above nonaqueous solvents are normally used in a mixture of two or more. In particular, it is preferable to use a mixture of a cyclic carbonate with a chain carbonate or a mixture of a cyclic carbonate and a chain carbonate with another solvent.

Compounds, such as vinylene carbonate, vinyl ethylene carbonate, succinic anhydride, maleic anhydride, propane sultone, and diethyl sulfone; difluorophosphates, such as lithium difluorophosphate; and the like may be added to the electrolyte solution. An anti-overcharging agent, such as diphenyl ether or cyclohexylbenzene, may be added to the electrolyte solution.

Examples of an electrolyte dissolved in the nonaqueous solvent include $LiClO_4$, $LiPF_6$, $LiBF_4$, $LiCF_3SO_3$, LiN $(CF_3SO_2)_2$, LiN $(CF_3CF_2SO_2)_2$, LiN $(CF_3SO_2)$ $(C_4F_9SO_2)$, and LiC $(CF_3SO_2)_3$. The concentration of the electrolyte in the electrolyte solution is normally 0.5 to 2 mol/L and is preferably 0.6 to 1.5 mol/L.

[Separator]

It is preferable to use a separator interposed between the positive and negative electrodes. The separator is preferably a porous sheet or nonwoven fabric made of a polyolefin, such as polyethylene or polypropylene.

[EXAMPLES]

The contents of the present invention are described more specifically with reference to Examples below. The present invention is not limited by Examples below without departing from the scope of the invention. The values described in the manufacturing conditions and evaluation results in Examples below mean the maximum and minimum preferable values in the embodiment of the present invention. A preferable range may be defined by the above-described upper or lower limit and a value described in Examples below or by the values described in Examples.

<Example 1>

(Preparation of Negative Electrode for Nonaqueous Electrolyte Solution Secondary Battery)

Carbon black having a primary particle size of 24 nm, a BET specific surface area (SA) of 115 $m^2$/g, and a DBP oil absorption of 110 mL/100 g was added to graphite particles having a d50 of 8.0 $\mu$m, a d90 of 12.5 $\mu$m, a d10 of 5.3 $\mu$m, a d90/d10 ratio of 2.4, a BET specific surface area of 10.9 $m^2$/g, a tap density of 0.90 g/$cm^3$, a circularity (1.5 to 40 $\mu$m) of 0.95, a circularity (10 to 40 $\mu$m) of 0.91, and a volume resistivity of 0.053 $\Omega$·cm measured when the powder density was 1.1 g/$cm^3$ in an amount equal to 2.0% by mass of the amount of graphite particles. The above components were mixed and stirred with a rotary mixer including a mechanism that disintegrates aggregates of the carbon black with a chopper and a mechanism capable of mixing and stirring a powder by the rotation of a shovel at a chopper rotational speed of 3000 rpm for 5 minutes. The resulting powder mixture was mixed with a petroleum-derived heavy oil, which is produced by naphtha pyrolysis, used as a carbonaceous substance precursor. Subsequently, a heat treatment was performed in an inert gas at 1100°C. The resulting baked material was subjected to pulverization-classification treatment to form composite carbon particles (1) that included graphite particles provided with carbon black microparticles and amorphous carbon deposited on the surfaces of the graphite particles. The composite carbon particles (1) were used as a negative electrode material. It was confirmed on the basis of the baking yield that the composite carbon particles (1) were covered with 2 parts by weight of amorphous carbon relative to 100 parts by weight of graphite. The physical properties of the negative electrode material were measured by the above-described methods. Table 1 (Tables 1A and 1B) summarizes the results.

<Preparation of Negative Electrode Sheet>

An electrode sheet that included an active material layer having an active material layer density of 1.35 $\pm$ 0.03 g/cm$^3$ was prepared using the negative electrode material prepared in the above example as a negative electrode active material. Specifically, 50.00 $\pm$ 0.02 g of the negative electrode material was mixed with 50.00 $\pm$ 0.02 g (0.500 g in terms of solid content) of a 1-mass% aqueous solution of a carboxymethyl cellulose sodium salt and 1.00 $\pm$ 0.05 g (0.5 g in terms of solid content) of an aqueous dispersion of a styrene-butadiene rubber having a weight-average molecular weight of 270000. The resulting mixture was stirred with a hybrid mixer produced by Keyence Corporation for 5 minutes and then degassed for 30 seconds to form a slurry.

The above slurry was applied to a copper foil having a thickness of 10 $\mu$m, which was used as a current collector, with a die coater so as to have a width of 10 cm such that the negative electrode material was deposited on the copper foil at a density of 6.00 $\pm$ 0.2 mg/cm$^2$. After drying had been performed, the copper foil was cut to a width of 5 cm and then roll-pressed with a roller having a diameter of 20 cm in order to adjust the density of the resulting active material layer to be 1.35 $\pm$ 0.03 g/cm$^3$. Hereby, an electrode sheet was prepared.

<Preparation of Positive Electrode Sheet>

As for the positive electrode, 85% by mass of lithium nickel-manganese-cobalt oxide (LiNiMnCoO$_2$) used as a positive electrode active material was mixed with 10% by mass of acetylene black used as a conductive agent and 5% by mass of polyvinylidene fluoride (PVdF) used as a binder in a N-methylpyrrolidone solvent to form a slurry. The slurry was applied to an aluminum foil having a thickness of 15 $\mu$m, which was used as a current collector, with a blade coater such that the positive electrode material was deposited on the aluminum foil at a density of 13.7 $\pm$ 0.2 mg/cm$^2$. Subsequently, drying was performed at 130°C. Then, roll pressing was performed in order to adjust the density of the positive electrode to be 2.60 $\pm$ 0.05 g/cm$^3$. Hereby, an electrode sheet was prepared.

<Method for Preparing Nonaqueous Electrolyte Solution Secondary Battery (Laminated-Type Battery)>

The positive and negative electrode sheets prepared by the above methods and a polyethylene separator were stacked on top of one another in the order of negative electrode, separator, and positive electrode. The resulting battery element was packed with a tubular aluminum laminating film. An electrolyte solution prepared by dissolving LiPF$_6$ in a mixed solvent of ethylene carbonate (EC), dimethyl carbonate (DMC), and ethylmethyl carbonate (EMC) (volume ratio = 3:3:4) such that the concentration of LiPF$_6$ was 1 mol/L was charged into the resulting package. Subsequently, the package was vacuum-sealed. Hereby, a sheet-like nonaqueous electrolyte solution secondary battery was prepared. Then, the sheet-like battery was pressed by being sandwiched between glass plates in order to increase the adhesion between the electrodes.

<Low-Temperature Output Characteristic>

The low-temperature output characteristic of the laminated nonaqueous secondary battery prepared by the above method for preparing a nonaqueous secondary battery was measured by the measuring method described below.

The nonaqueous secondary battery that had never been subjected to any charge-discharge cycle was subjected to 3 cycles of initial charging and discharging at 25°C in a voltage range of 4.1 to 3.0 V at a current of 0.2C (the current at which the rated capacity determined on the basis of 1-hour rate discharge capacity is discharged in 1 hour is referred to as "1C"; the same applies hereinafter) and then 2 cycles of initial charging and discharging in a voltage range of 4.2 to 3.0 V at a current of 0.2C (in charging, constant-voltage charging was performed at 4.2 V for another 2.5 hours). Subsequently, the battery was charged at a current of 0.2C to an SOC of 50%. Then, the battery was discharged for 2 seconds at each of the constant current values of 1/8C, 1/4C, 1/2C, 1.5C, 2.5C, 3.5C, and 5C in a low temperature environment of -30°C. An increase in the battery voltage which occurs when the battery is charged for 2 seconds under each of the conditions was measured. The current I that can flow during 2 seconds when the maximum charging voltage is 4.2 V was measured on the basis of the increases in the battery voltage. The value calculated as 4.2 × I (W) was considered the low-temperature output characteristic of each battery, which is expressed as the ratio of the low-temperature output of the battery relative to 100 of the low-temperature output of the battery prepared in Comparative example 2 below. Table 2 summarizes the results of measurement of low-temperature output characteristic.

<Quick Discharge Characteristic>

The quick discharge characteristic of the laminated nonaqueous secondary battery prepared by the above method for preparing a nonaqueous secondary battery was measured by the measuring method described below.

The nonaqueous secondary battery that had never been subjected to any charge-discharge cycle was subjected to 3 cycles of initial charging and discharging at 25°C in a voltage range of 4.1 to 3.0 V at a current of 0.2C (the current at which the rated capacity determined on the basis of 1-hour rate discharge capacity is discharged in 1 hour is referred to as "1C"; the same applies hereinafter) and then 2 cycles of initial charging and discharging in a voltage range of 4.2 to 3.0 V at a current of 0.2C (in charging, constant-voltage charging was performed at 4.2 V for another 2.5 hours). The battery was subsequently charged at a current of 0.2C to a voltage of 4.2 V at 25°C (constant-voltage charging was performed at 4.2 V for another 2.5 hours) and then discharged at a current of 3C to a voltage of 3.0 V. The ratio of the discharge capacity at a current of 3C to the discharge capacity at a current of 0.2C ([(Discharge capacity at current of 3C)/(Discharge capacity at current of 0.2C)] × 100)(%) was considered the quick discharge characteristic. Table 2 summarizes the results of measurement of quick discharge characteristic.

<Cycle Characteristic>

The quick discharge characteristic of the laminated nonaqueous secondary battery prepared by the above method for preparing a nonaqueous secondary battery was measured by the measuring method described below.

The nonaqueous secondary battery that had never been subjected to any charge-discharge cycle was subjected to 3 cycles of initial charging and discharging at 25°C in a voltage range of 4.1 to 3.0 V at a current of 0.2C (the current at which the rated capacity determined on the basis of 1-hour rate discharge capacity is discharged in 1 hour is referred to as "1C"; the same applies hereinafter) and then 2 cycles of initial charging and discharging in a voltage range of 4.2 to 3.0 V at a current of 0.2C (in charging, constant-voltage charging was performed at 4.2 V for another 2.5 hours). The battery was subsequently subjected to 500 cycles of charging and discharging at a current of 2C in a voltage range of 4.2 to 3.0 V at 60°C. The ratio of the discharge capacity measured in the 500th cycle to the discharge capacity measured in the 1st cycle ([(Discharge capacity in 500th cycle)/(Discharge capacity in 1st cycle)] × 100)(%) was considered the cycle characteristic. Table 2 summarizes the results of measurement of cycle characteristic.

<Example 2>

A sample was prepared as in Example 1, except that the composite carbon particles were covered with 3 parts by weight of amorphous carbon relative to 100 parts by weight of graphite particles. The sample was evaluated as in Example 1. Table 1 (Tables 1A and 1B) and Table 2 summarize the results.

<Example 3>

A sample was prepared as in Example 2, except that graphite particles having a d50 of 8.3 $\mu$m, a d90 of 13.3 $\mu$m, a d10 of 4.5 $\mu$m, a d90/d10 ratio of 3.0, a BET specific surface area of 11.0 m$^2$/g, a tap density of 0.83 g/cm$^3$, a circularity (1.5 to 40 $\mu$m) of 0.94, a circularity (10 to 40 $\mu$m) of 0.90, and a volume resistivity of 0.049 $\Omega$·cm measured when the powder density was 1.1 g/cm$^3$ were used. The sample was evaluated as in Example 1. Table 1 (Tables 1A and 1B) and Table 2 summarize the results.

<Example 4>

A sample was prepared as in Example 1, except that graphite particles having a d50 of 9.9 $\mu$m, a d90 of 26.9 $\mu$m, a d10 of 5.8 $\mu$m, a d90/d10 ratio of 4.6, a BET specific surface area of 9.6 m$^2$/g, a tap density of 0.94 g/cm$^3$, a circularity (1.5 to 40 $\mu$m) of 0.94, and a circularity (10 to 40 $\mu$m) of 0.90 were used. The sample was evaluated as in Example 1, except that the weight of the active material in the positive electrode sheet was changed to 20.5 mg/cm2, the weight of the active material in the negative electrode sheet was changed to 9.00 ± 0.2 mg/cm2, the density of the active material layer was changed to 1.50 ± 0.03 g/cm$^3$, and the ratio of the discharge capacity at a current of 2C to the discharge capacity at a current of 0.2C was used as quick discharge characteristic. Table 1 (Tables 1A and 1B) and Table 3 summarize the results.

<Example 5>

A sample was prepared as in Example 1, except that graphite particles having a d50 of 12.4 $\mu$m, a d90 of 33.9 $\mu$m, a d10 of 6.3 $\mu$m, a d90/d10 ratio of 5.4, a BET specific surface area of 8.7 m$^2$/g, a tap density of 0.96 g/cm$^3$, a circularity (1.5 to 40 $\mu$m) of 0.94, and a circularity (10 to 40 $\mu$m) of 0.90 were used. The sample was evaluated as in Example 4. Table 1 (Tables 1A and 1B) and Table 3 summarize the results.

<Comparative Example 1>

A sample was prepared as in Example 1, except that graphite particles having a volume-average particle size (d50) of 9.8 $\mu$m, a d90 of 17.2 $\mu$m, a d10 of 4.1 $\mu$m, a d90/d10 ratio of 4.2, a BET specific surface area of 9.4 m$^2$/g, a tap density of 0.70 g/cm$^3$, a circularity (1.5 to 40 $\mu$m) of 0.93, a circularity (10 to 40 $\mu$m) of 0.87, and a volume resistivity of 0.032 $\Omega$·cm measured when the powder density was 1.1 g/cm$^3$ were used. The sample was evaluated as in Example 1. Table 1 (Tables 1A and 1B) and Table 2 summarize the results.

<Comparative Example 2>

A sample was prepared as in Example 1, except that carbon black was not used. The sample was evaluated as in Examples 1 and 4. Tables 1 (Tables 1A and 1B) and Tables 2 and 3 summarize the results.

[Table 1]

<Table 1A>

|  | d50, $\mu$m | d90, $\mu$m | d10, $\mu$m | d90/d10 | SA, m$^2$/g | Tap density g/cm$^3$ | Powder density measured when volume resistivity is 0.05 $\Omega$·cm, g/cm$^3$ |
|---|---|---|---|---|---|---|---|
| Example 1 | 8.1 | 12.8 | 5.4 | 2.4 | 6.8 | 1.048 | 1.121 |
| Example 2 | 8.4 | 12.8 | 5.7 | 2.2 | 6.4 | 1.059 | 1.116 |
| Example 3 | 8.7 | 13.6 | 5.8 | 2.3 | 6.4 | 1.046 | 1.100 |
| Example 4 | 9.7 | 20.2 | 5.8 | 3.5 | 6.7 | 1.091 | 1.157 |
| Example 5 | 11.8 | 24.9 | 6.2 | 4.0 | 6.1 | 1.160 | 1.200 |
| Comparative example 1 | 11.0 | 18.2 | 6.5 | 2.8 | 6.6 | 0.855 | 0.937 |
| Comparative example 2 | 8.1 | 12.8 | 5.3 | 2.4 | 5.2 | 1.055 | 1.142 |

<Table 1B>

|  | D$_{r-t}$, g/cm$^3$ | Volume resistivity measured when powder density is equal to tap density, $\Omega$·cm | Volume resistivity measured when powder density is 1.1 g/cm$^3$, $\Omega$·cm | Circularity | Raman R value |
|---|---|---|---|---|---|
| Example 1 | 0.073 | 0.109 | 0.057 | 0.95 | 0.56 |
| Example 2 | 0.057 | 0.106 | 0.057 | 0.95 | 0.58 |
| Example 3 | 0.054 | 0.095 | 0.049 | 0.94 | 0.55 |
| Example 4 | 0.066 | 0.108 | 0.102 | 0.94 | 0.55 |
| Example 5 | 0.040 | 0.090 | 0.277 | 0.94 | 0.55 |

(continued)

| | $D_{r-t}$, g/cm$^3$ | Volume resistivity measured when powder density is equal to tap density, Ω·cm | Volume resistivity measured when powder density is 1.1 g/cm$^3$, Ω·cm | Circularity | Raman R value |
|---|---|---|---|---|---|
| Comparative example 1 | 0.082 | 0.097 | 0.025 | 0.89 | 0.43 |
| Comparative example 2 | 0.087 | 0.157 | 0.076 | 0.95 | 0.35 |

[Table 2]

<Table 2>

| | Low-temperature output characteristic (Comparative example 2 = 100) | Quick discharge characteristic, % | Cycle characteristic, % |
|---|---|---|---|
| Example 1 | 116 | 92.1 | 68.0 |
| Example 2 | 112 | 92.1 | 67.8 |
| Example 3 | 117 | 92.3 | 66.7 |
| Comparative example 1 | 111 | 90.9 | 68.0 |
| Comparative example 2 | 100 | - | 61.1 |

[Table 3]

<Table 3>

| | Low-temperature output characteristic (Comparative example 2 = 100) | Quick discharge characteristic, % | Cycle characteristic, % |
|---|---|---|---|
| Example 4 | 118 | 95.5 | 89.5 |
| Example 5 | 127 | 96.0 | 89.2 |
| Comparative example 2 | 100 | 94.3 | 86.9 |

The results described in Tables 1 (1A and 1B) and Tables 2 and 3 clearly confirm that excellent low-temperature output characteristic, excellent quick discharge characteristic, and excellent cycle characteristic were achieved in Examples 1 to 5, where the density index ($D_{r-t}$) was adjusted to fall within the specific range, compared with Comparative examples 1 and 2. This is presumably because adjusting the density index ($D_{r-t}$) to fall within the specific range enables volume resistivity to be maintained to be low even at a lower powder density while the particle shape is maintained to be more spherical or lump-like and thereby allows smooth migration of Li ions inside the electrode and formation of sufficient electrical conduction paths, which enhances low-temperature output characteristic, quick discharge characteristic, and cycle characteristic. In contrast, in Comparative example 2 where circularity was low and the density index ($D_{r-t}$) was large, quick discharge characteristic became degraded presumably because Li ions could not migrate inside the electrode smoothly. In Comparative example 3 where volume resistivity was high and the density index ($D_{r-t}$) was large, low-temperature output characteristic and cycle characteristic became degraded presumably because the formation of electrical conduction paths was particularly at an insufficient level. That is, using the negative electrode material for nonaqueous secondary batteries according to the present invention may markedly improve low-temperature output characteristic, quick discharge characteristic, and cycle characteristic.

Although the present invention has been described in detail with reference to specific embodiments, it is apparent to a person skilled in the art that various alterations and modifications can be made therein without departing from the spirit and scope of the present invention.

The present application is based on Japanese Patent Application No. 2018-064736 filed on March 29, 2018, which is incorporated herein by reference in its entirety.

Industrial Applicability

The negative electrode material for nonaqueous electrolyte solution secondary batteries according to the present invention, the negative electrode for nonaqueous secondary batteries which includes the negative electrode material, and the nonaqueous secondary battery that includes the negative electrode material are excellent in terms of low-temperature output characteristic, quick discharge characteristic, and cycle characteristic and therefore suitably used for automotive use; power tool use; portable device use, such as mobile phones and computers; and the like.

**Claims**

1. A negative electrode material for nonaqueous secondary batteries, the negative electrode material comprising graphite including amorphous carbon deposited on at least a part of a surface of the graphite, the negative electrode material having a density index ($D_{r-t}$) of 0.080 g/cm$^3$ or less, wherein the density index ($D_{r-t}$) is represented by Formula 1 below.

```
Formula 1:

D_r-t (g/cm³) = [Powder density (g/cm³) measured when

volume resistivity is 0.05 Ω·cm] - [Tap density (g/cm³)]
```

2. The negative electrode material for nonaqueous secondary batteries according to Claim 1, the negative electrode material having a circularity of 0.90 or more, wherein the circularity is measured by flow system particle image analysis.

3. The negative electrode material for nonaqueous secondary batteries according to Claim 1 or 2, wherein a volume resistivity of the negative electrode material which is measured when a powder density is equal to a tap density is 0.150 Ω·cm or less.

4. The negative electrode material for nonaqueous secondary batteries according to any one of Claims 1 to 3, the carbon material having a tap density of 0.88 to 1.65 g/cm$^3$.

5. The negative electrode material for nonaqueous secondary batteries according to any one of Claims 1 to 4, the carbon material having a Raman R value of 0.20 or more and 1.00 or less, wherein the Raman R value is represented by Formula 2 below.

```
Formula 2:

[Raman R value] = [Intensity I_B of peak P_B occurring

around 1360 cm⁻¹ in Raman spectral analysis]/[Intensity I_A of

peak P_A occurring around 1580 cm⁻¹]
```

6. A negative electrode for nonaqueous secondary batteries, the negative electrode comprising a current collector and an active material layer disposed on the current collector, the active material layer including the negative electrode material according to any one of Claims 1 to 5.

7. A nonaqueous secondary battery comprising positive and negative electrodes and an electrolyte, the negative electrode being the negative electrode for nonaqueous secondary batteries according to Claim 6.

## INTERNATIONAL SEARCH REPORT

| International application No. |
| --- |
| PCT/JP2019/014113 |

A. CLASSIFICATION OF SUBJECT MATTER
Int.Cl. H01M4/587(2010.01)i, H01M4/36(2006.01)i

According to International Patent Classification (IPC) or to both national classification and IPC

B. FIELDS SEARCHED

Minimum documentation searched (classification system followed by classification symbols)
Int.Cl. H01M4/587, H01M4/36

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2015-135811 A (MITSUBISHI CHEMICAL CORPORATION) 27 July 2015, claims 1, 6-7, paragraphs [0020], [0021], [0123], [0217], [0236], table 1 (Family: none) | 1-7<br>2 |
| X<br>Y | JP 2014-186956 A (MITSUBISHI CHEMICAL CORPORATION) 02 October 2014, claims 1-2, 6-7, paragraphs [0064], [0065], [0161], [0169], [0170], table 1 (Family: none) | 1-7<br>2 |
| X<br>Y | JP 2014-186955 A (MITSUBISHI CHEMICAL CORPORATION) 02 October 2014, claims 1, 10-11, paragraphs [0106], [0107], [0212], table 1 (Family: none) | 1-7<br>2 |

☒ Further documents are listed in the continuation of Box C.     ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07.06.2019 | Date of mailing of the international search report<br>18.06.2019 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2019/014113 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2014-060148 A (MITSUBISHI CHEMICAL CORPORATION) 03 April 2014, claims 1-3, 6-7, paragraph [0023], examples, table 1<br>& US 2015/0243989 A1, claims 1-3, 6-7, paragraph [0056], examples, table 1 & JP 2018-60805 A & WO 2014/030720 A1 & EP 2889937 A1 & KR 10-2015-0046077 A & CN 104584286 A | 1, 3-7<br>2 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014060148 A
- JP 2008027664 A
- JP 2014241302 A
- JP 2013197082 A
- JP 2017045574 A
- JP 2018064736 A